# EUROPEAN PATENT APPLICATION

(11) **EP 2 522 419 A1**
(43) Date of publication of application: **14.11.2012**
(21) Application number: 12166402.3
(22) Date of filing: 02.05.2012
(51) Int. Cl.: B01D 53/94, B01J 23/44, B01J 29/46, B01J 35/00, F01N 3/035

(54) **Catalyst device**

(30) Priority: 13.05.2011 JP 2011108165
(71) Applicant: Kabushiki Kaisha Toyota Jidoshokki, Kariya-shi, Aichi 448-8671 (JP)
(72) Inventor: Murasaki, Takanori, Kariya-shi, Aichi 448-8671 (JP)
(74) Representative: TBK

(57) **Abstract**

A catalyst device 4 has a wall flow-type substrate 14. The substrate 14 is formed of a porous base material 11. An SCR catalyst for reduction of NOx is supported in pores in the interior of the base material 11. The surface 11a of the base material 11 on a diesel engine 1 side is coated with a trapping layer 12 that traps PM in an exhaust gas. The surface 11b of the substrate 11 on a side opposite to the diesel engine 1 side is coated with an oxidation catalyst layer 13 that is formed of an oxidation catalyst.

## Description

### BACKGROUND OF THE INVENTION

### Field of the Invention

The present invention relates to a catalyst device, and more particularly, to a catalyst device that is used in an exhaust gas purification apparatus that utilizes a urea selective catalytic reduction (SCR) system.

### Description of the Related Art

Urea SCR systems have been developed in order to decrease the amount of nitrogen oxide (NOx) that is present in the exhaust gas of diesel engines. In a basic configuration, a urea SCR system comprises: an oxidation catalyst for oxidizing nitrogen monoxide (NO) into nitrogen dioxide (NO₂); an SCR catalyst, disposed downstream of the oxidation catalyst, for reducing NOx to nitrogen and water through a chemical reaction between NOx and ammonia generated out of the aqueous urea solution; a urea addition system for adding the aqueous urea solution to the SCR catalyst; and an oxidation catalyst, disposed downstream of the SCR catalyst, for oxidizing residual ammonia that is not consumed in the chemical reaction in the SCR catalyst. A diesel particulate filter (DPF) for removing particulate matter (PM) can be provided between the SCR catalyst and the oxidation catalyst that oxidizes NO.

This conventional urea SCR system that is formed of two oxidation catalysts, an SCR catalyst and a DPF, becomes very large as a whole. Also the SCR catalyst is disposed far removed from the engine. As a result, such a system is problematic in that the temperature of the exhaust gas drops before the exhaust gas reaches the SCR catalyst, and the purification performance of the SCR catalyst decreases accordingly. In order to solve this problem, Japanese Patent Application Publication No. 2010-19221 discloses a configuration wherein the size of a urea SCR system as a whole is reduced through the use of a catalyst device in which an SCR catalyst, a DPF and an oxidation catalyst are integrated together, and wherein the catalyst device is disposed as close as possible to the engine.

In order to integrate the SCR catalyst, the DPF and the oxidation catalyst with each other, the SCR catalyst and the oxidation catalyst were coated onto a filter that corresponds to a DPF in Japanese Patent Application Publication No. 2010-19221. However, this resulted in a higher pressure drop, and loss of fuel mileage, which was problematic. Here, NOx purification performance drops when the coating amount of the SCR catalyst is decreased in order to reduce the pressure drop. Therefore, a high-porosity substrate must be used as the filter. Doing so, however, translates into a lower PM trapping performance. Therefore, it was difficult to combine a DPF function with an SCR catalyst function.

### SUMMARY OF THE INVENTION

In order to solve the above problems, it is an object of the present invention to provide a catalyst device in which a DPF, an SCR catalyst and an oxidation catalyst are integrated together, such that the catalyst device combines a DPF function and an SCR catalyst function.

The present invention provides a catalyst device that purifies an exhaust gas discharged by an internal combustion engine, comprising: a porous base material that supports, in the interior thereof, an SCR catalyst that reduces NOx in the exhaust gas; a trapping layer that traps PM in the exhaust gas and is coated on a surface of the base material on the internal combustion engine side; and an oxidation catalyst layer that contains an oxidation catalyst and is coated on a surface of the base material on a side opposite to the internal combustion engine side.

### BRIEF DESCRIPTION OF THE DRAWINGS

Fig. 1 is a schematic diagram of the configuration of an exhaust gas purification apparatus provided with a catalyst device according to an embodiment of the present invention; and
Fig. 2 is a cross-sectional diagram of a substrate in the catalyst device according to the embodiment.

### DESCRIPTION OF THE PREFERRED EMBODIMENTS

Embodiments of the present invention are explained next with reference to the accompanying drawings.

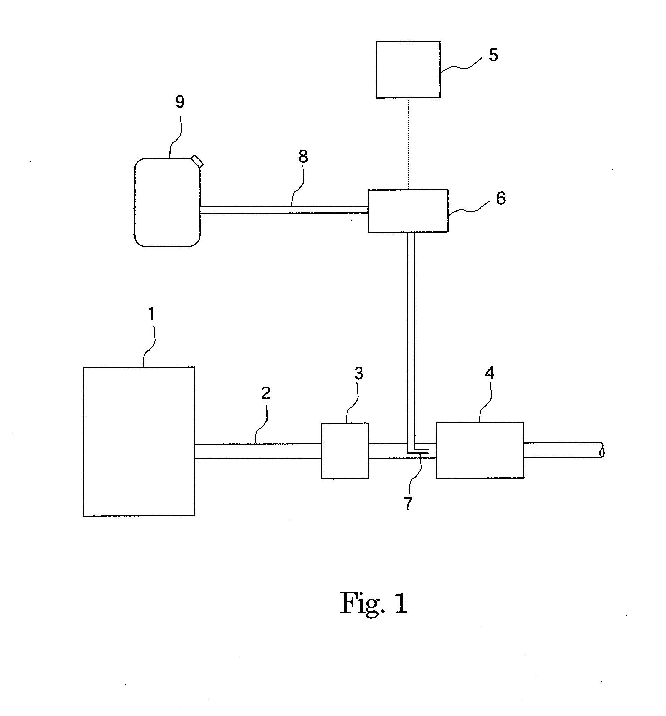

Fig. 1 illustrates a schematic diagram of the configuration of an exhaust gas purification apparatus provided with catalyst device according to an embodiment of the present invention. An exhaust pipe 2 through which exhaust gas discharged from a diesel engine 1 flows is provided with an oxidation catalyst device 3 and a catalyst device 4 that purifies the exhaust gas: An injection nozzle 7 that injects an aqueous urea solution, as a reductant, is provided between the oxidation catalyst device 3 and the catalyst device 4. The injection nozzle 7 communicates, via piping 8, with an aqueous urea solution tank 9 that stores an aqueous urea solution. The piping 8 is provided with an aqueous urea solution addition system 6 for supplying aqueous urea solution from inside the aqueous urea solution tank 9 to the injection nozzle 7. The aqueous urea solution addition system 6 is electrically connected to an ECU 5 which is a control device.

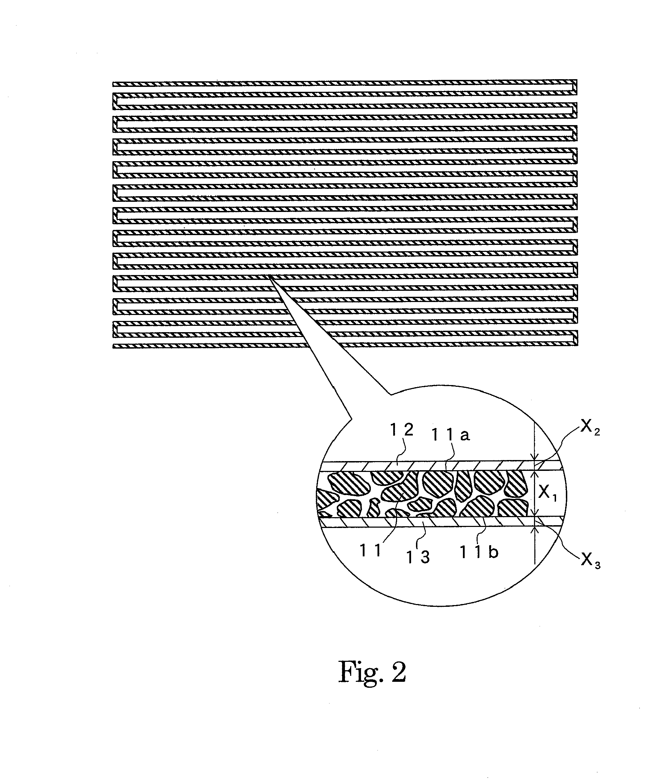

As illustrated in Fig. 2, the catalyst device 4 has a wall flow-type substrate 14. The substrate 14 includes a porous base material 11. The material used in the base material 11 may be a ceramic material ordinarily used as a filter substrate, for instance cordierite, alumina, silicon carbide or the like. An SCR catalyst for reduction of NOx is supported in the pores in the interior of the base material 11. A surface 11a of the base material 11 on the diesel engine 1 side is coated with a trapping layer 12 that traps PM in the exhaust gas. The same material as in the base material 11 can be used as the material of the trapping layer 12. A surface 11b of the base material 11 on the side opposite to the diesel engine 1 side is coated with an oxidation catalyst layer 13 that is formed of an oxidation catalyst.

A thickness X₁ of the base material 11 is greater than both a thickness X₂ of the trapping layer 12 and a thickness X₃ of the oxidation catalyst layer 13. Preferably, the thickness X₁ of the base material 11 ranges from 200 µm to 400 µm. The thickness X₂ of the trapping layer 12 ranges preferably from 10 µm to less than 200 µm, and the thickness X₃ of the oxidation catalyst layer 13 ranges preferably from 0.1 µm to less than 200 µm.

Setting the thickness relationship such as noted above allows suppression of pressure loss in the trapping layer 12, and allows the base material (coatable surface area inside the porous base material) to be made appropriate for the coating amount of SCR catalyst as required for NOx purification.

The porosity of the base material 11 is greater than the porosity of the trapping layer 12, and the porosity of the oxidation catalyst layer 13 is equal to or greater than the porosity of the base material 11. Preferably, the porosity of the base material 11 and of the oxidation catalyst layer 13 range from 55% to 70%, and the porosity of the trapping layer 12 ranges preferably from 20% to less than 55%.

The average pore size of the base material 11 is greater than the average pore size of the trapping layer 12, and the average pore size of the oxidation catalyst layer 13 is equal to or greater than the average pore size of the base material 11. Preferably, the average pore size of the base material 11 and the oxidation catalyst layer 13 ranges from 15 µm to 100 µm, and the average pore size of the trapping layer 12 ranges preferably from 6 µm to less than 15 µm.

Setting the relationships of porosity and average pore size such as noted above allows suppression of pressure loss downstream of the trapping layer 12, while enabling, at the same time, good contact between the exhaust gas and the catalyst.

The operation of the exhaust gas purification apparatus provided with the catalyst device according to the present embodiment will be explained next.

As illustrated in Fig. 1, exhaust gas discharged by the diesel engine 1 flows through the exhaust pipe 2. The exhaust gas flows into the oxidation catalyst device 3, whereupon NO in the exhaust gas is oxidized into NO₂. Next, the exhaust gas flows into the catalyst device 4. The ECU 5 operates the aqueous urea solution addition system 6 at an appropriate timing, to supply aqueous urea solution in the aqueous urea solution tank 9 to the injection nozzle 7 via the piping 8, and cause the aqueous urea solution to be added into the catalyst device 4 from the injection nozzle 7.

As illustrated in Fig. 2, the PM in the exhaust gas that flows into the catalyst device 4 is captured by the trapping layer 12 as the exhaust gas passes through the trapping layer 12. Next, the exhaust gas diffuses into the pores of the base material 11. The aqueous urea solution added into the catalyst device 4 is hydrolyzed on account of the heat of the exhaust gas, to yield ammonia and carbon dioxide. By virtue of the SCR catalyst supported in the pores in the base material 11, the generated ammonia reacts with NOx in the exhaust gas that has diffused into the pores, and NOx is reduced thereby to nitrogen and water. Residual ammonia that has not been consumed in the base material 11 is oxidized at the oxidation catalyst in the oxidation catalyst layer 13, and the purified exhaust gas is discharged to the atmosphere.

The amount of PM captured in the trapping layer 12 increases as time goes by. When the amount of captured PM is determined to be equal to or greater than a prescribed amount, for instance through detection of a pressure difference between the inlet and outlet of the catalyst device 4, the trapping layer 12 can be regenerated in accordance with known methods, for instance through addition of fuel to the exhaust gas. During regeneration of the trapping layer 12, hydrocarbons and carbon monoxide are oxidized by the oxidation catalyst in the oxidation catalyst layer 13.

The SCR catalyst is supported in the interior of the porous base material 11, and hence the coating amount need not be reduced to thereby reduce the pressure loss. The trapping layer 12 is coated onto the surface 11a of the base material 11 on the diesel engine 1 side. Therefore, it is not necessary to reduce the pressure loss by using a high-porosity base material. As a result, a DPF, an SCR catalyst and an oxidation catalyst can be integrated together while fulfilling a combined DPF function and SCR catalyst function.

In the present embodiment, the trapping layer 12 may be coated with, for instance, alumina, titania, a zeolite, silica or the like, as the hydrolysis catalyst for hydrolysis of urea. Although urea can be hydrolyzed on account of the heat of the exhaust gas, the hydrolysis catalyst allows urea to be hydrolyzed reliably also when the temperature of the exhaust gas is low, for instance immediately after startup of the diesel engine 1. A second SCR catalyst different from the SCR catalyst that is supported in the interior of the base material 11 may be incorporated in the oxidation catalyst layer 13. As a result, NOx can be reduced in the oxidation catalyst layer 13 as well, and the NOx purification power can be thus enhanced.

### Examples

The effect of the catalyst device according to the present invention is explained next based on examples.

Table 1 sets forth the features of Examples 1 to 3, which correspond to catalyst devices according to the present invention, and the features of catalyst devices according to Comparative examples 1 to 9 (Comparative example 1 is a conventional urea SCR system wherein a DPF, an SCR catalyst and an oxidation catalyst are separate members).

**Table 1**

| | Feature of DPF/SCR | Trapping layer | | | | Base material | | | | | Oxidation catalyst layer | | | |
|---|---|---|---|---|---|---|---|---|---|---|---|---|---|---|
| | | Porosity | APS | Thickness | Catalyst | Porosity | APS | Thickness | Catalyst | Coating amount of catalyst | Porosity | APS | Thickness | Catalyst |
| | | [%] | [µm] | [µm] | | [%] | [µm] | [µm] | | [g/L] | [%] | [µm] | [µm] | |
| Example 1 | Integral type | 50 | 12 | 10 | Al₂O₃ | 60 | 20 | 300 | Fe-ZSM5 | 150 | 65 | 25 | 70 | Fe-ZSM5 +PtPd/Al₂O₃ |
| Example 2 | Integral type | 50 | 12 | 100 | Al₂O₃ | 65 | 25 | 300 | Fe-ZSM5 | 150 | 65 | 25 | 70 | Fe-ZSM5 +PtPd/Al₂O₃ |
| Example 3 | Integral type | 50 | 12 | 70 | Al₂O₃ | 65 | 25 | 300 | Fe-ZSM5 | 150 | 65 | 25 | 70 | Fe-ZSM5 +PtPd/Al₂O₃ |
| Comparative example 1 | Separate type | - | - | - | - | - | - | - | - | - | - | - | - | - |
| Comparative example2 | Integral type | - | - | - | - | 50 | 12 | 300 | Fe-ZSM5 | 20 | - | - | - | - |
| Comparative example 3 | Integral type | - | - | - | - | 50 | 12 | 300 | Fe-ZSM5 | 150 | - | - | - | - |
| Comparative example 4 | Integral type | - | - | - | - | 65 | 25 | 300 | Fe-ZSM5 | 150 | - | - | - | - |
| Comparative example 5 | Integral type | 50 | 12 | 70 | Al₂O₃ | 50 | 12 | 300 | Fe-ZSM5 | 150 | - | - | - | - |
| Comparative example 6 | Integral type | 50 | 12 | 70 | Al₂O₃ | 50 | 12 | 300 | Fe-ZSM5 | 20 | - | - | - | - |
| Comparative example 7 | Integral type | 50 | 12 | 70 | AlO₂O₃ | 65 | 25 | 300 | Fe-ZSM5 | 150 | - | - | - | - |
| Comparative example 8 | Integral type | 50 | 12 | 300 | Al₂O₃ | 65 | 25 | 70 | Fe-ZSM5 | 20 | - | - | - | - |
| Comparative example 9 | Integral type | 65 | 25 | 300 | Al₂O₃ | 50 | 12 | 70 | Fe-ZSM5 | 150 | - | - | - | - |

Examples 1 to 3 have a three-layer structure explained in the embodiment, comprising a trapping layer coated with Al₂O₃ as a hydrolysis catalyst, a porous base material in which Fe-ZSM5 as an SCR catalyst is supported in internal pores, and an oxidation catalyst layer that contains Fe-ZSM5 as a second SCR catalyst and PtPd/Al₂O₃ as an oxidation catalyst. Table 1 gives the porosity, average pore size (APS) and thickness for each layer, as well as the coating amount of SCR catalyst in the base material.

As explained above, Comparative example 1 is a conventional urea SCR system having a DPF, an SCR catalyst and an oxidation catalyst as separate members. Comparative examples 2 to 4 have a one-layer structure in which Fe-ZSM5, as an SCR catalyst, is supported in pores of a porous base material. Comparative examples 5 to 9 have a two-layer structure comprising a trapping layer coated with Al₂O₃, as a hydrolysis catalyst, and a porous base material in which Fe-ZSM5, as an SCR catalyst, is supported in internal pores. Table 1 gives the porosity, average pore size and thickness for each layer, as well as the coating amount of SCR catalyst in the base material.

Table 2 sets forth evaluation results obtained upon evaluation of the performance of the catalyst devices of Examples 1 to 3 and Comparative examples 2 to 9, using these catalyst devices installed as the catalyst device 4 of the exhaust gas purification apparatus illustrated in Fig. 1, and using a conventional urea SCR system as Comparative example 1. The evaluation results were graded qualitatively into a three-grade ranking in which a double circle denotes excellent results, a single circle denotes good results, and a cross mark denotes problematic results.

**Table 2**

| | Compactness | PM trapping ability | Pressure loss | NOx purification rate | Ammonia slip property | Slip-through property of HC and CO |
|---|---|---|---|---|---|---|
| Example 1 | ⓞ | ○ | ○ | ⓞ | ⓞ | ⓞ |
| Example 2 | ⓞ | ⓞ | ○ | ⓞ | ⓞ | ⓞ |
| Example 3 | ⓞ | ⓞ | ⓞ | ⓞ | ⓞ | ⓞ |
| Comparative example 1 | × | ⓞ | ⓞ | × | ⓞ | ⓞ |
| Comparative example 2 | ⓞ | ⓞ | ⓞ | × | × | × |
| Comparative example 3 | ⓞ | ⓞ | × | ⓞ | × | × |
| Comparative example 4 | ⓞ | × | ⓞ | ⓞ | × | × |
| Comparative example 5 | ⓞ | ⓞ | × | ⓞ | × | × |
| Comparative example 6 | ⓞ | ⓞ | ⓞ | × | × | × |
| Comparative example 7 | ⓞ | ⓞ | ⓞ | ⓞ | × | × |
| Comparative example 8 | ⓞ | ⓞ | ⓞ | × | × | × |
| Comparative example 9 | ⓞ | ⓞ | × | ⓞ | × | × |

Examples 1 to 3 and Comparative examples 2 to 9 utilize integrated catalyst devices, and hence exhibit superior compactness vis-à-vis Comparative example 1, which is a conventional urea SCR system in which a DPF, an SCR catalyst and an oxidation catalyst are separate members. PM trapping ability, pressure loss derived from PM deposition and NOx purification rate are related to compatibility between the DPF function and SCR catalyst function. In Comparative examples 2 to 4 there is no trapping layer, and PM is trapped in the base material. When attempting to improve PM trapping ability and pressure loss derived from PM deposition as in Comparative example 2, however, the coating amount of SCR catalyst decreases and the NOx purification rate becomes poorer. The pressure loss derived from PM deposition becomes worse when the coating amount of SCR catalyst is increased with respect to that of Comparative example 2, as in Comparative example 3. The PM trapping ability becomes worse when adjusting the porosity and average pore size in Comparative example 3 in order to improve the pressure drop, as in Comparative example 4. In Comparative example 5, the pressure loss derived from PM deposition is yet worse. In Comparative example 6, the pressure loss derived from PM deposition is improved by reducing the coating amount of SCR catalyst, but the NOx purification rate drops in doing so. In Comparative examples 8 and 9 the thickness of the trapping layer is set to 300 µm and the thickness of the base material is set to 70 µm. The results of Comparative examples 8 and 9 indicate that it is difficult to achieve, on the basis of such a thickness relationship, both the coating amount of SCR catalyst (NOx purification rate) and pressure loss derived from PM deposition as are required.

Comparative examples 2 to 9, which lack an oxidation catalyst layer that is formed of an oxidation catalyst that oxidizes ammonia, hydrocarbons and carbon monoxide, yielded problematic results in terms of ammonia slip properties, and slip-through properties of hydrocarbons and carbon monoxide during PM regeneration.

That is, even though a cross mark appears in at least one given item in all of Comparative examples 1 to 9, in Examples 1 to 3, by contrast, all items are excellent or good. Therefore, the catalyst devices in Examples 1 to 3 are found to combine both a DPF function and an SCR catalyst function. Accordingly, Examples 1 to 3, which are specific embodiments of the catalyst device according to the present invention, display a satisfactory DPF function, SCR catalyst function and oxidation catalyst function, while integrating those functions with each other. That is, high PM trapping (low pressure loss) and high coating amount of an SCR catalyst (high NOx purification rate) can be realized. It also becomes possible to achieve further size reduction through coating of the oxidation catalyst layer.

A catalyst device 4 has a wall flow-type substrate 14. The substrate 14 is formed of a porous base material 11. An SCR catalyst for reduction of NOx is supported in pores in the interior of the base material 11. The surface 11a of the base material 11 on a diesel engine 1 side is coated with a trapping layer 12 that traps PM in an exhaust gas. The surface 11b of the substrate 11 on a side opposite to the diesel engine 1 side is coated with an oxidation catalyst layer 13 that is formed of an oxidation catalyst.

## Claims

1. A catalyst device that purifies an exhaust gas discharged by an internal combustion engine, comprising:
a porous base material that supports, in the interior thereof, an SCR catalyst that reduces NOx in the exhaust gas;
a trapping layer that traps PM in the exhaust gas and is coated on a surface of the base material on the internal combustion engine side; and
an oxidation catalyst layer that contains an oxidation catalyst and is coated on a surface of the base material on a side opposite to the internal combustion engine side.

2. The catalyst device according to claim 1, wherein porosity of the base material is greater than porosity of the trapping layer, and porosity of the oxidation catalyst layer is equal to or greater than the porosity of the base material,
an average pore size of the base material is greater than an average pore size of the trapping layer, and an average pore size of the oxidation catalyst layer is equal to or greater than the average pore size of the base material, and
thickness of the base material is greater than both thickness of the trapping layer and thickness of the oxidation catalyst layer.

3. The catalyst device according to claim 1 or 2, wherein porosity of the base material and porosity of the oxidation catalyst layer range from 55% to 70%, and porosity of the trapping layer ranges from 20% to less than 55%.

4. The catalyst device according to any of claims 1 to 3, wherein an average pore size of the base material and an average pore size of the oxidation catalyst layer range from 15 µm to 100 µm, and an average pore size of the trapping layer ranges from 6 µm to less than 15 µm.

5. The catalyst device according to any of claims 1 to 4, wherein thickness of the base material ranges from 200 µm to 400 µm, thickness of the trapping layer ranges from 10 µm to less than 200 µm, and thickness of the oxidation catalyst layer ranges from 0.1 µm to less than 200 µm.

6. The catalyst device according to any of claims 1 to 5, wherein the oxidation catalyst layer further contains a second SCR catalyst.

7. The catalyst device according to any of claims 1 to 7, wherein the trapping layer contains a hydrolysis catalyst that hydrolyzes a reductant that is added to the catalyst device in order for NOx to be reduced by the SCR catalyst.
